# EUROPÄISCHE PATENTSCHRIFT

(11) **EP 2 910 805 B1**
(45) Veröffentlichungstag und Bekanntmachung des Hinweises auf die Patenterteilung: **07.06.2017**
(21) Anmeldenummer: 15155732.9
(22) Anmeldetag: 19.02.2015
(51) Int. Cl.: F16C 33/20, B29C 47/88, B32B 15/00, B32B 27/00, B32B 27/20, B32B 37/08, B32B 37/10, B32B 15/18, B32B 27/28, F16C 33/28, B29K 705/10, B29L 7/00, B29K 705/06, B29K 71/00, B29K 705/02, B29L 9/00, B29K 705/00, B29C 47/00, B29C 47/06, B29C 47/14, B29K 705/12, B32B 37/12

(54) **Verfahren zur Herstellung eines hybriden Metall-Kunststoff-Verbundes für ein Gleitlager**
Process for manufacturing a hybrid metal/plastic composite for a sliding bearing
Procédé de fabrication d'un composite synthétique-métal hybride pour un palier lisse

(30) Priorität: 19.02.2014 DE 102014102125
(43) Veröffentlichungstag der Anmeldung: 26.08.2015
(73) Patentinhaber: HÜHOCO GmbH, 42279 Wuppertal (DE)
(72) Erfinder: Bovenkamp, André, 42287 Wuppertal (DE); Welsch, Klaus, 58339 Breckerfeld (DE)
(74) Vertreter: Patent- und Rechtsanwälte Dr. Solf & Zapf

(56) Entgegenhaltungen:
- WO-A1-99/05425
- DE-A1- 10 226 264
- GB-A- 2 150 464
- GB-A- 2 270 720
- GB-A- 2 492 519
- US-A- 4 847 135
- US-A1- 2011 176 757

## Beschreibung

Die vorliegende Erfindung betrifft ein Verfahren zur Herstellung eines hybriden Metall-Kunststoff-Verbundes für ein Gleitlager, umfassend das Auftragen einer Gleitschicht, die einen thermoplastischen Basiskunststoff enthält, auf einen bandförmigen metallischen Träger.

Neben Wälzlagern stellen Gleitlager im Maschinen- und Gerätebau die am häufigsten gebrauchte Lager-Bauart dar. In ihnen stehen zwei sich relativ zueinander bewegende Teile in direktem Kontakt zueinander, wobei sie gegen einen durch Reibung verursachten Widerstand aufeinander abgleiten. Dadurch entsteht in den Kontaktflächen ein die Lager-Lebensdauer begrenzender Verschleiß, der durch den Einsatz reibungsarmer Materialpaarungen sowie gegebenenfalls durch eine Schmierung, welche die beiden Kontaktflächen vollständig oder teilweise voneinander trennt, minimiert werden kann. Außerdem entsteht in Gleitlagern durch Umwandlung eines Teiles der Bewegungsenergie Wärme, die in die Lagerteile fließt und gegebenenfalls abgeleitet werden muss.

Moderne Kunststoffgleitlager, die oftmals in hybrider Form, d. h. in Verbundbauweise, hergestellt sind, umfassen in der Regel spezielle, selbstschmierende Kunststoffe. Dabei kann es sich bei den Lagerwerkstoffen auch - und vor allem - um sogenannte Verbundstoffe (Compounds) handeln, die aus einem Basispolymer, Verstärkungsstoffen, wie Fasern, Gewebe, Vlies, Pulver, Plättchen, Kügelchen etc., und aus eingebetteten Festschmierstoffen oder Ölen bestehen. Letztere wandern während des Betriebs durch Mikroverschleiß ständig an die Oberfläche und mindern so die Reibkraft und den Lagerverschleiß.

Als Basiskunststoff wird wegen seiner besonders niedrigen Reibungszahl dabei oft Polytetrafluorethylen (PTFE) eingesetzt. In der Literatur wird diesbezüglich das vorteilhafte Gleitverhalten dieses Werkstoffs mit dem Rutschen von nassem Eis auf nassem Eis verglichen. Einer Ausbildung von PTFE als Massivlagerschicht stehen jedoch seine im Vergleich zu metallischen Werkstoffen geringe Festigkeit, seine hohe Wärmeausdehnung und seine schlechte Wärmeleitfähigkeit entgegen. Außerdem gilt PTFE als dünne Massivschicht nicht als extrudierbar und wirft - wie auch andere Gleitwerkstoffe mit geringer freier Oberflächenenergie - große Probleme hinsichtlich seiner Haftung auf dem Träger auf. Es wird daher z. B. als Folie aufgewalzt und/oder auf den Träger gesintert. Das hängt damit zusammen, dass die Oberflächenspannung von PTFE extrem niedrig liegt, und PTFE deshalb schwierig zu benetzen bzw. zu verkleben ist.

Der Verbund aus einem als Träger fungierenden Metallsubstrat und einer reibungsmindernden Kunststoffschicht kann formschlüssig und/oder stoffschlüssig zustande kommen.

Zum Erzeugen von Formschluss kann die Oberfläche eines metallischen Trägers durch eine abtragende Bearbeitung angeraut werden, oder es kann eine raue Metallschicht aufgesintert werden. Hybride Lager, welche aus einem solchermaßen aufgerauten Metallträger und aus einer tribotechnisch wirksamen Kunststoffschicht bestehen, sind beispielsweise aus der DE 35 34 242 A1 und der EP 0 217 462 A1 bekannt.

Die erste Druckschrift DE 35 34 242 A1 bezieht sich auf einen wartungsfreien Mehrschicht-Gleitlagerwerkstoff, der einen Metallträger aus Stahl, Bronze oder einer hochfesten Aluminiumlegierung aufweist, auf dem sich eine Raugrundschicht befindet, die vorzugsweise durch eine 0,10 mm bis 0,35 mm dicke, porös aufgesinterte Bronzeschicht, Eisenschicht oder Schicht einer Aluminiumlegierung gebildet ist. Die Kombination umfasst außerdem eine Gleitschicht aus einer Matrix aus Polytetrafluoräthylen (PTFE), mit deren Werkstoff in der Raugrundschicht vorhandene Raugrundtiefen ausgefüllt sind, und die gegebenenfalls noch die Reibung verbessernde und den Verschleiß hemmende Zusätze von Blei, Molybdändisulfid, Graphit, Kohlefasern, Glasfasern, Keramikfasern, Glaskugeln, Keramik-Hohlkugeln, Bariumsulfat, Zinksulfid und/oder Bleiborosilikat enthält, wobei die Gleitschicht eine Dicke von 0,1 mm bis 1,0 mm besitzt und durch Aufwalzen einer 0,5 mm bis 3,0 mm dicken PTFE-Folie und Sintern erzeugt ist.

In der zweitgenannten Druckschrift EP 0 217 462 A1 ist ein wartungsarmer Gleitlagerwerkstoff beschrieben, der aus einer metallischen Stützschicht und aus einer eine 30 µm bis 500 µm dicke Gleitschicht bildenden Mischung aus Polyvinylidenfluorid (PVDF) und wenigstens einem die Reib- und Gleiteigenschaften verbessernden Zusatz besteht. Das PVDF enthält anstelle von Blei 0,5 Gew.-% bis 3,0 Gew.-% eines nicht-toxischen Metalloxidpulvers mit einer Korngröße von etwa 0,05 µm sowie 10 Gew.-% bis 40 Gew.-% massive Glaskugeln mit einer Körnung von 1 µm bis 50 µm. Ein bevorzugt eingesetzter wartungsarmer Gleitlagerwerkstoff besteht aus drei Schichten: Stahlrücken, Bronzeschicht und Gleitschicht. Auf den Stahlrücken ist die 0,35 mm dicke Bronzeschicht aus kugeligem Zinn-Blei-Bronzepulver porös aufgesintert. Die Gleitschicht besteht aus einer Mischung von PVDF mit 12 Gew.-% PTFE, 1,5 Gew.-% Chromoxid und 22 Gew.-% Glaskugeln. Die Poren der Bronzeschicht sind durch einen Walzprozess unter gleichzeitiger Bildung der Gleitschicht mit der genannten Mischung ausgefüllt worden.

Eine Möglichkeit zum Erzeugen eines stoffschlüssigen Verbundes zwischen Träger und Gleitschicht repräsentiert das durch die EP 1 875 091 B1 patentgeschützte Antifriktions-Verbundsystem. Das aus dieser Druckschrift bekannte Verfahren wird als ein Verfahren der eingangs genannten Art angesehen. Zum Erzeugen des Stoffschlusses wird dabei - bevorzugt im Coil-Coating-Verfahren - ein Haftvermittler auf einen metallischen Träger aufgebracht, welcher die Adhäsion einer nachfolgend aufgebrachten elastomeren Zwischenschicht, insbesondere einer Schicht aus Nitril-Butadien-Rubber (NBR), auf dem Träger verstärkt. Auf die NBR-Schicht wird dann eine Matrix aus Polyurethan (PUR) aufgebracht, die Polytetrafluorethylen (PTFE) enthält. Dieses Verfahren hat sich in der Praxis bewährt, wobei insbesondere die Möglichkeit der kontinuierlichen Fertigung des Antifriktions-Verbundsystems als vorteilhaft hervorgehoben werden muss, beispielsweise die Möglichkeit der Fertigung von Rolle zu Rolle bei Einsatz eines bandförmigen metallischen Trägers. Bei allen vorstehend beschriebenen Verfahren ist von Nachteil, dass die Funktionsschicht nicht aus dem reinen Gleitwerkstoff, also dem PTFE, besteht, und dass deshalb auch die dem reinen PTFE entsprechenden, tribologisch theoretisch möglichen Minimalwerte für Reibung und Verschleiß nicht erreicht werden. Mikroskopische Untersuchungen zeigen darüber hinaus, dass die Compounds relativ grob gemengt sind, so dass die reibungsmindernden Bestandteile im Kontaktbereich der Gleitschicht mit dem Gleitpartner also auch nicht vollflächig zur Anlage kommen. Zudem ist das Aufbringen von Zwischenschichten - seien es metallische oder elastomere Zwischenschichten - teuer.

Die WO 99/05425 A1 offenbart einen hybriden Metall-Kunststoff-Verbund für ein Gleitlager, umfassend einen bandförmigen metallischen Träger und eine auf diesem aufgetragene Gleitschicht. Die Gleitschicht enthält einen thermoplastischen Basiskunststoff, der ein extrudierbarer Hochleistungskunststoff ist, wobei die Gleitschicht als Extrusionsschicht ausgebildet ist.

Die DE 102 26 264 A1 beschreibt einen bekannten Gleitlagerverbundwerkstoff mit einer metallischen Stützschicht, gegebenenfalls mit einer darauf aufgebrachten porösen Trägerschicht, und mit einer eine Gleitfläche für einen Gleitpartner bildenden bleifreien Gleitschicht mit einem Gleitschichtmaterial auf Kunststoffbasis. Als Gleitschichtmaterial wird PEEK (Polyetheretherketon) als matrixbildende Kunststoffkomponente eingesetzt und ferner ein Schmierstoff sowie eine härtende Komponente, wobei beide in Form feiner Teilchen mit einem D50-Wert der Teilchengröße von höchstens 500 nm vorliegen. Der gewichtsprozentuale Anteil des Schmierstoffs in Form der feinen Teilchen beträgt - bezogen auf die Masse des Gleitschichtmaterials - 3 bis 15 Prozent.

Die GB 2 492 519 A beschreibt ein bekanntes Gleitelement, welches folgende Bestandteile umfasst: eine Basis, die aus Metall oder Keramik hergestellt ist; eine imprägnierte Schicht, die sich auf einem Oberflächenabschnitt einer Gleitseite der Basis befindet, und eine Harzschicht, welche sich auf dieser imprägnierten Schicht befindet und die Gleitseite bedeckt. Das Verfahren zur Herstellung eines derartigen Gleitelements umfasst als Verfahrensschritt die Ausbildung einer Ausnehmung auf dem Oberflächenabschnitt der Gleitseite der Basis durch eine maschinelle Be-arbeitung, wie eine Elektroerosion. In spezieller Ausführung wurde das Gleitelement erhalten, indem eine Basismetallstütze vorbereitet wurde, die aus einer 20 mm dicken Stahlplatte bestand und durch die Ausbildung der Ausnehmung dann die Bereitstellung der imprägnierten Schicht unterstützt, wobei ein Imprägnieren und ein Beschichten mit einer Harzschicht erfolgte, die primär aus PEEK (Polyether¬ether-keton) zusammengesetzt war. Hierzu wurde die Stahlplatte auf eine Temperatur oberhalb des Schmelzpunkts von PEEK erhitzt und darauf eine PEEK-Platte aufgepresst, welche vorher in einem Plattenextruder durch Dickenreduktion auf eine Stärke von 5 mm gebracht worden war.

In der GB 2 270 720 A wird ein Verfahren zur Herstellung eines ebenen Lagers beschrieben, welches als Verfahrensschritte die Extrusion eines selbsttragenden Bandes aus einem thermoplastischen Lager-Oberflächenmaterial und die Positionierung dieses Bandes auf einer Oberfläche eines Trägerblattes umfasst. Dabei ist das Trägerblatt eine metallische Einzelschicht mit darin verteilten Durchgangs¬öffnungen. In einem weiteren Verfahrensschritt werden Wärme und Druck erzeugt, so dass das Material des thermoplastischen Bandes erweicht und in die Öffnungen des Trägerblattes gedrängt wird, wodurch das Band und das Trägermaterial miteinander verbunden werden. Nicht erweichte Teile des Bandes bilden die Lageroberfläche. Der vorliegenden Erfindung liegt die Aufgabe zu Grunde, ein Verfahren zur Herstellung eines hybriden Metall-Kunststoff-Verbundes für ein Gleitlager der eingangs genannten Art zu schaffen, womit bei einfacher und kontinuierlicher Herstellungsweise der bandförmige metallische Träger und der thermoplastische Werkstoff der Gleitschicht derart fest aneinander gebunden sein sollen, dass eine Abhebung voneinander auch bei hoher mechanischer Beanspruchung nicht auftritt, und wobei die Gleitschicht einen minimalen Reibungswiderstand aufweist. Erfindungsgemäß wird diese Aufgabe dadurch gelöst, dass auf einen bandförmigen metallischen Träger eine Gleitschicht aufgetragen wird, die einen thermoplastischen Basiskunststoff enthält, wobei als thermoplastischer Basiskunststoff ein extrudierbarer Hochleistungskunststoff eingesetzt wird, wobei das Auftragen der Gleitschicht auf den metallischen Träger bei Temperaturen über 280 °C mittels einer Breitschlitzdüse in einem Band-Direkt-Extrusionsverfahren vorgenommen wird, und wobei die Gleitschicht als aus zwei Filmschichten bestehende Doppelschicht ausgebildet wird, deren Filmschichten gleichzeitig mittels einer Breitschlitzdüse aufgetragen werden, die als Tandemdüse mit zwei nebeneinander liegenden Düsenschlitzen ausgebildet ist. Wenn dabei vorstehend und im Weiteren die Ausdrücke "Hochleistungskunststoff" oder auch "Massenkunststoff" und "technischer Kunststoff" verwendet werden, so beziehen sich diese auf eine in der Fachwelt übliche Einteilung der Kunststoffe hinsichtlich ihrer Dauergebrauchstemperatur. Entsprechend dieser Einteilung wird zwischen Massen- oder Standardkunststoffen mit einer Dauergebrauchstemperatur bis zu 90 °C, technischen Kunststoffen mit einer Dauergebrauchstemperatur bis zu 140 °C und Hochleistungskunststoffen mit einer Dauergebrauchstemperatur über 140 °C unterschieden.

Die Dauergebrauchstemperatur kann auf verschiedene Weise ermittelt werden. In der Methode nach UL 746 B wird ein sogenannter Temperatur-Index angeführt, d. h., es wird diejenige Temperatur bestimmt, bei der der Polymerwerkstoff nach 60 000 bzw. 100 000 Stunden noch die Hälfte seiner Zugfestigkeit, seiner Schlagzugfestigkeit oder seiner elektrischen Durchschlagfestigkeit aufweist. Eine analoge Methode ist die IEC 216 (International Electrical Committee), welcher die DIN VDE 0304 entspricht. Nach dieser Methode wird diejenige Temperatur bestimmt, bei der nach 20 000 Stunden die Werte der mechanischen und elektrischen Eigenschaften nur noch die Hälfte betragen.

Als Massenkunststoffe werden aufgrund dieser Kriterien insbesondere Polyethylen (PE), Polypropylen (PP), Polyvinylchlorid (PVC) und Polystyrol (PS) klassifiziert. Zu den technischen Kunststoffen zählen Polymethacrylsäuremethylester (PMMA), Polyamid (PA), Polyethylenterephtalat (PET), Polycarbonat (PC), Acrylnitril-Butadien-Styrol (ABS) und Polyoxymethylen (POM).

Zu den Hochleistungskunststoffen zählen Polytetrafluorethylen (PTFE), Polyvinylidenfluorid (PVDF), Polybutylenterephtalat (PBT), Polysulfone (PSU), Polyaryletherketone (PAEK), Polyphenylensulfide (PPS) und Polyimide (PI) sowie verschiedene Copolymere, die die kleinsten repetierenden Ketten-Struktureinheiten der vorgenannten Verbindungen gemeinsam enthalten.

Besonders geeignet erscheint aus diesen Gruppen von Hochleistungskunststoffen Polyetheretherketon (PEEK). Dabei handelt es sich um einen hochtemperaturbeständigen, teilkristallinen, thermoplastischen Kunststoff, dessen Schmelztemperatur nach ISO 3146 bei einer Aufheizrate von 10 K/min im Bereich von 330 °C bis 350 °C liegt. Polyetheretherketone sind gegen fast alle organischen und anorganischen Chemikalien beständig. PEEK ist sehr kratzbeständig bzw. wenig abrasiv. PEEK-Beschichtungen (Polyetheretherketon) können sowohl in Pulverform, als auch als Dispersion aufgetragen werden. PEEK ist außerdem spritzgießtechnisch gut verarbeitbar und lässt sich hervorragend extrudieren. Schon der sortenreine Hochleistungskunststoff PEEK kommt dabei insbesondere hinsichtlich seiner tribologischen Eigenschaften denen von PTFE sehr nahe. Durch eine optional mögliche Modifizierung des PEEK-Basismaterials können jedoch sogar tribologische Charakteristika eingestellt werden, die besser sind, als die vieler Compounds, die auf der Basis von PTFE hergestellt sind.

Die Erfindung schließt dabei eine Modifizierung, also eine Compoundierung, des insbesondere eine Matrix bildenden, thermoplastischen Basiskunststoffs zu Erzielung oder Verstärkung einer selbstschmierenden Wirkung nicht aus. Unter "Basiskunststoff" wird erfindungsgemäß verstanden, dass der Kunststoff zumindest den relativ größten Anteil in der Gleitschicht bildet, jedoch sollte der Basiskunststoff insbesondere in der Gleitschicht zu mehr als 50 Masseprozent, bevorzugt zu mehr als 70 Masseprozent, besonders bevorzugt zu mehr als 85 Masseprozent, enthalten sein. Im Rahmen der Compoundierung können - spätestens nach dem Aufschmelzen der zu extrudierenden Kunststoffmasse - dem Basiskunststoff entweder im Rahmen einer Polyblendbildung ein oder mehrere weitere Kunststoffe, wie z. B. auch Polytetrafluorethylen (PTFE), oder andere, reibungsverbessernde und verschleißmindernde, insbesondere anorganische Zusätze, wie Molybdändisulfid, Graphit, Bariumsulfat, Zinksulfid, Bleiborosilikat, Kohle-, Glas- und/oder Keramikfasern zugesetzt werden. Zur Erzielung einer hohen Wirkung ist es dabei von außerordentlichem Vorteil, wenn - abgesehen von den Fasern - die Teilchengrößen der zugesetzten Stoffe im Nanometerbereich liegen, also kleiner sind als 1000 nm. Ein bevorzugter Bereich liegt dabei dann vor, wenn die Teilchengröße im Bereich von 3 nm bis 300 nm, insbesondere im Bereich von 5 nm bis 150 nm, besonders bevorzugt im Bereich von 15 nm bis 80 nm, liegt. Mit dem überproportionalen Anstieg der spezifischen Teilchenoberfläche bei kleiner werdender Partikelgröße steigt auch die tribologische Wirksamkeit der Zusätze entsprechend an, da für die chemischen und physikalischen Interaktionen der Gleitschicht mit einer Gegengleitfläche, wie insbesondere für die Herabsetzung der Adhäsionskräfte, eine größere und homogenere Wirkfläche zur Verfügung steht, als bei Teilchendurchmessern im Mikrometer- oder im Millimeterbereich.

Bei dem erfindungsgemäß zur Anwendung kommenden Verfahren zur Kunststoffbeschichtung des bandförmigen metallischen Trägers mittels Direkt-Extrusion wird das Träger-Metallband in seiner Längsrichtung bewegt und auf eine Temperatur über dem Schmelzpunkt des Basiskunststoffs erhitzt. Mittels einer Breitschlitzdüse wird ein Film aus dem geschmolzenen, thermoplastischen Basiskunststoff unmittelbar auf die eine Seite des bewegten Metallbandes aufgebracht und an das Metallband angedrückt. Dies geschieht, indem der Träger durch einen Spalt zwischen zwei Rollen hindurchgeführt wird, von denen die am Kunststofffilm anliegende Rolle, die sogenannte Laminatorrolle, unter der Schmelztemperatur des Kunststoffes gehalten wird. Zwischen dem aufgetragenen Kunststofffilm und der an ihn angedrückten Laminatorrolle wird ein Flächenkontakt herbeigeführt und dieser durch eine Weiterbewegung der sich kontaktierenden Oberflächen mit jeweils gleicher Geschwindigkeit solange aufrechterhalten, bis zumindest die Oberfläche des aufgetragenen Basiskunststoffs erstarrt ist.

Im Rahmen der Erfindung können einerseits Träger-Bänder mit glatten Oberflächen beschichtet werden, wobei unter "glatt" eine sich üblicherweise nach dem Kaltwalzen oder Warmwalzen mit gegebenenfalls nachfolgendem Entzundern einstellende Rauheit verstanden wird. Bei diesen Träger-Bändern kann die Haftung zum Basiskunststoff insbesondere durch den Einsatz eines vor der Extrusionsbeschichtung auf den metallischen Träger aufgetragenen Haftvermittlers - also nahezu vollständig durch Stoffschluss - zustande gebracht werden. Andererseits können auch - mit besonderem Vorteil - Träger-Bänder aus Streckmetall zum Einsatz kommen, bei denen die Verbindung zwischen Träger und Gleitschicht vorwiegend durch Formschluss zustande kommt, indem das Streckmetall in den Basiskunststoff bzw. das die Gleitschicht bildende Compound eingebettet wird. Beide Verfahrensvarianten sind im Mikrometer-Bereich für die Dicken der aufzutragenden Gleitschichten steuerbar. Kalibrier-Operationen sind nicht notwendig.

Als Haftvermittler, die bei Trägerbändern mit glatten Oberflächen eingesetzt werden können, kommen - insbesondere zumindest im technologischen Prozess der Herstellung des Verbunds - bis zur Schmelztemperatur des Basiskunststoffs temperaturbeständige, modifizierte Schmelzkleber in Betracht, die im Coil-Coating-Verfahren aufgebracht werden können.

Dabei kann es sich insbesondere um eine wässrige Dispersion eines thermoplastischen Polyurethans in Kombination mit einer mehrphasigen, selbstvernetzenden Acrylatdispersion handeln. Der Haftvermittler bildet nach seinem Auftragen und Trocknen einen blockfesten und klebefreien thermisch aktivierbaren, latent-reaktiven Trockenfilm aus, dessen Schichtdicke insbesondere im Bereich von 4 µm bis 28 µm, bevorzugt im Bereich von 8 µm bis 15 µm liegen kann. Bei der späteren Bandextrusion bewirkt die Wärmeenergie der auf den Haftvermittler auftreffenden und dort erstarrenden, die Gleitschicht bildenden Schmelze in einer Grenzschicht eine innige Verbindung der Kunststoffe der Haftvermittlerschicht und der Gleitschicht. Die genannte Polyurethan-Acrylat-Kombination sichert im fertigen Produkt langzeitlich bis zu etwa 100 °C eine gute Metallhaftung der Gleitschicht und ist beständig gegen Weichmacher, Fette und Öle. Dabei gestattet der Haftvermittlerfilm auch eine ausgezeichnete automatisierte stanztechnische Verarbeitung des Fertigprodukts.

Beim Einsatz von Streckmetall-Trägerbändern ist eine bei der Extrusion vorliegende niedrige Viskosität des - gegebenenfalls compoundierten - Basiskunststoffs von Vorteil, die es ermöglicht, dass die Schmelze das Streckmetall vollständig durchdringt, bevor sie auf der Laminatorrolle erstarrt. Diesbezüglich geeignete Viskositätsbereiche werden nachfolgend noch genannt.

Durch die erfindungsgemäße Band-Direkt-Extrusion mit insbesondere PEEK als Basiskunststoff, aber auch anderen Hochleistungskunststoffen, gelingt es, mit vergleichsweise geringem technologischem Aufwand Metallbänder aller Art mit einer tribotechnisch hocheffektiven Gleitschicht auszurüsten.

Dies äußert sich insbesondere darin, dass bei einem Test nach ISO 7148-2 bei einer Gleitgeschwindigkeit von 0,5 m/s und einer Flächenpressung von 4 N/mm² im Trockenlauf gegen Stahl oder alternativ auch bei einem Test nach ASTM G 137 bei einer Gleitgeschwindigkeit von 1 m/s und einer Flächenpressung von 5 MPa ebenfalls im Trockenlauf gegen Stahl Reibungszahlen im Bereich von 0,12 bis 0,35, vorzugsweise im Bereich von 0,15 bis 0,24, erreicht werden. Bei dem Test nach der ISO-Norm konnten dabei Verschleißwerte im Bereich von 1,0 10⁻⁶ mm³ / Nm bis 4,0 10⁻⁶ mm³ / Nm und bei dem Test nach ASTM Verschleißwerte im Bereich von 0,2 10⁻⁶ mm³ / Nm bis 0,7 10⁻⁶ mm³ / Nm erreicht werden.

Weitere vorteilhafte Ausführungen der Erfindung sind in den Unteransprüchen und der nachfolgenden speziellen Beschreibung enthalten. Anhand dreier durch die beiliegenden Zeichnungen veranschaulichter Ausführungsbeispiele wird die Erfindung dabei näher erläutert. Es zeigen:
- Fig. 1: einen Querschnitt durch eine erste Ausführung eines erfindungsgemäß herstellbaren Verbundkörpers,
- Fig. 2: einen Querschnitt durch eine zweite Ausführung eines erfindungsgemäß herstellbaren Verbundkörpers,
- Fig. 3: zur Veranschaulichung des erfindungsgemäßen Verfahrens, eine schematische Darstellung einer Anlage zur Band-Direkt-Extrusion,
- Fig. 4: zur Veranschaulichung des erfindungsgemäßen Verfahrens, eine perspektivische Darstellung der in Fig. 3 dargestellten Anlage,
- Fig. 5: eine Draufsicht auf die zweite Ausführung eines Verbundkörpers während seiner erfindungsgemäßen Herstellung,
- Fig. 6: zur weiteren Veranschaulichung des erfindungsgemäßen Verfahrens, einen schematisierten Querschnitt durch die in Fig. 2 mit VI bezeichnete Einzelheit der Vorrichtung zur Band-Direkt-Extrusion,
- Fig. 7: eine Draufsicht auf eine dritte Ausführung eines erfindungsgemäß herstellbaren Verbundkörpers nach seiner Herstellung,
- Fig. 8: eine Unteransicht der in Fig. 7 dargestellten dritten Ausführung des erfindungsgemäß herstellbaren Verbundkörpers.

In den Figuren der Zeichnung sind gleiche Teile und einander entsprechende Teile auch mit gleichen Bezugszeichen versehen, so dass sie auch jeweils nur einmal beschrieben werden. Sofern bestimmte, beschriebene und/oder aus den Zeichnungen entnehmbare Merkmale des erfindungsgemäß herstellbaren hybriden Metall-Kunststoff-Verbundes oder seiner Bestandteile nur im Zusammenhang mit den Ausführungsbeispielen erwähnt sind, sind diese aber auch gemäß der Erfindung unabhängig von dem jeweiligen Ausführungsbeispiel als Einzelmerkmal oder aber auch in Kombination mit anderen Merkmalen der Ausführungsbeispiele von Bedeutung und können als zur Erfindung gehörig beansprucht werden.

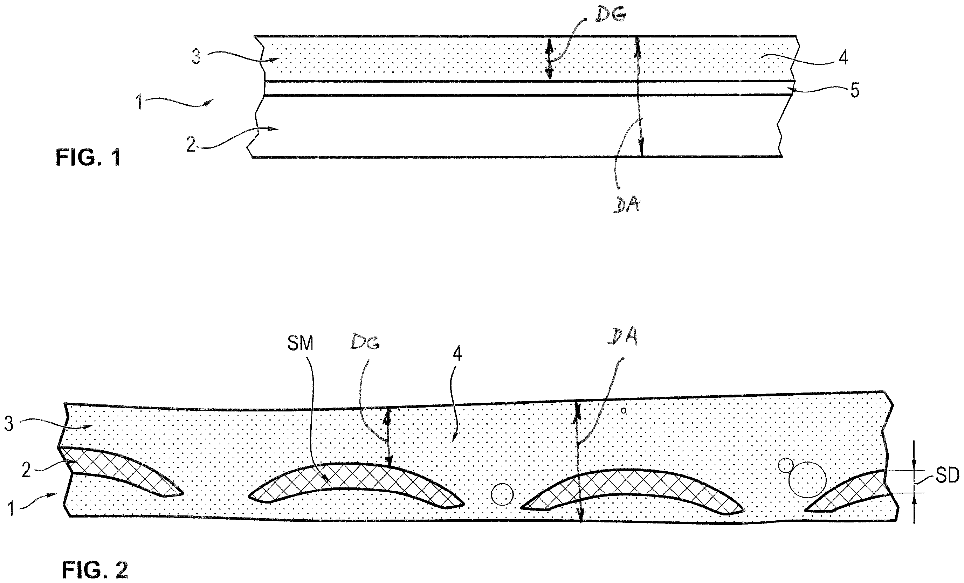

Wie zunächst die erste Ausführung gemäß Fig. 1 zeigt, umfasst ein erfindungsgemäß herstellbarer hybrider Metall-Kunststoff-Verbund 1, der in einem Gleitlager zur Anwendung kommen kann, einen bandförmigen metallischen Träger 2 und eine auf diesem aufgetragene Gleitschicht 3, die einen thermoplastischen Basiskunststoff 4 enthält.

Es ist vorgesehen, dass der thermoplastische Basiskunststoff 4 ein extrudierbarer Hochleistungskunststoff ist und die Gleitschicht 3 als Extrusionsschicht ausgebildet ist.

Das Extrudieren stellt gegenüber einem Spritzgießen, bei welchen ein Kunststoff aus einem Plastifiziergerät in einen Hohlraum eines Formwerkzeugs gespritzt wird, in dem er verdichtet wird, dann erkaltet und schließlich ausgeworfen wird, für den bandförmigen metallischen Träger eine vorteilhafte Alternative dar, da die Fertigung erfindungsgemäß kontinuierlich erfolgen kann.

Im Vergleich mit dem eingangs beschriebenen, aus dem Stand der Technik bekannten Aufwalzen und Sintern oder auch im Vergleich mit einem Kalandrierprozess, bei dem die Auftragung des Kunststoffs durch Aufwalzen einer erwärmten Folie unter Einsatz einer Serie von Walzen erfolgt, entsteht durch das erfindungsgemäß vorgesehene Extrudieren eine stärkere Adhäsion zwischen dem bandförmigen metallischen Träger 2 und der auf diesen aufgetragenen Gleitschicht 3.

Extrusionsschichten können durch geeignete werkstofftechnische Untersuchungen, insbesondere auch zerstörungsfrei, von Schichten, die andersartig aufgebracht sind, unterschieden werden. Dazu können, z. B. lichtmikroskopisch, gegebenenfalls unter Einsatz von polarisiertem Licht, oder unter Einsatz eines Mikrowellensensors nach dem Prinzip des FMCW-Radars (**F**requency **M**odulated **C**ontinuous **W**ave) oder unter Einsatz von modernen sensorischen Verfahren, wonach beispielsweise die zu untersuchende Probe pulsartig durch einen Lichtblitz aufgeheizt und das zeitliche Verhalten der Oberflächentemperatur mit einem Hochgeschwindigkeits-Infrarotsensor erfasst wird, eine Schichtcharakterisierung und Schichtdickenmessung, der Nachweis von Defekten, wie Einschlüssen oder Hohlräumen, eine Quantifizierung von amorphen und teilkristallinen Bereichen des Basiskunststoffs 4, eine Bestimmung von Anisotropien oder eine Bestimmung von Materialeigenschaften, wie Dielektrizitätskonstante, Dichte und/oder ggf. Porosität, in einem beispielsweise zum Vergleich heranziehbaren Sinter- oder Spritzgießwerkstoff, erfolgen.

Der thermoplastische Basiskunststoff 4 kann insbesondere zu mehr als 50 Masseprozent, bevorzugt zu mehr als 70 Masseprozent, besonders bevorzugt zu mehr als 85 Masseprozent, in der Gleitschicht 3 enthalten sein. Auch kann die Gleitschicht 3 vollständig aus dem Basiskunststoff 4 bestehen.

Als Hochleistungskunststoff kann, sofern er - zumindest als Compound, zusammen mit einem gegebenenfalls vorhandenen Zusatzstoff - extrudierbar ist, vor allem ein Polyarylenetherketon (PEAK), wie ein Polyphenylen, z. B. bevorzugt Poly[di-(oxy-1,4-phenylen)carbonyl-1,4-phenylen] (Polyetheretherketon, PEEK) oder Poly[oxy-1,4-phenylenoxy-di-(1,4-phenylencarbonyl-1,4-phenylen] (Polyetheretherketonketon, PEEKK) oder Poly[oxy-1,4-phenylencarbonyl-1,4-phenylenoxy-di-(1,4-phenylen-carbonyl)-1,4-phenylen] (Polyetherketonetherketonketon, PEKEKK) zur Anwendung kommen. Auch kann es sich bei dem Hochleistungskunststoff um ein Polyarylensulfid, wie Polyphenylensulfid (PPS), oder um ein Fluorpolymer, wie Ethylen-Tetrafluorethylen (ETFE), Polytrifluorethylen (PCTFE) oder Perfluorethylenpropylen (FEP) handeln. Polytetrafluorethylen (PTFE) sollte, insbesondere in materialreiner, z. B. unverblendeter, Form, wegen der eingangs erwähnten Nachteile nicht als Basiskunststoff 4 eingesetzt werden.

Es ist auch eine Modifizierung durch Polyblendbildung bzw. Compoundierung des Basiskunststoffs 4 möglich, durch die eine selbstschmierende Wirkung der Gleitschicht 3 in einer Gleitpaarung erzielt oder verstärkt werden kann. Dazu können weitere Kunststoffe oder andere tribologisch vorteilhaft wirkende, insbesondere anorganische Zusätze dem Basiskunststoff 4 zugesetzt werden. Wie bereits oben ausführlicher erwähnt, ist es dabei vorteilhaft, wenn die Teilchengrößen der zugesetzten Stoffe im Nanometerbereich liegen.

Als metallischer Träger 2 können alle in Bandform herstellbaren metallischen Werkstoffe eingesetzt werden. So kann der metallische Träger 2 beispielsweise aus kaltgewalztem Bandstahl, bevorzugt in den Qualitäten DC 01 bis DC 04 nach DIN EN 10 139, aus Fein- oder Feinstblech oder aus einem Edelstahl-, Aluminium- oder Buntmetallband bestehen. Auch der Einsatz profilierter Träger 2 oder gelochter Bleche ist möglich. Bevorzugte Dicken des Trägers 2 liegen im Bereich von 0,1 mm bis 3,5 mm, insbesondere im Bereich von 0,5 mm bis 1,5 mm.

Zwischen dem bandförmigen metallischen Träger 2 und der auf ihn aufextrudierten Gleitschicht 3 mit dem thermoplastischen Basiskunststoff 4 befindet sich bevorzugt eine Haftvermittlerschicht 5, die einen stoffschlüssigen Verbund zwischen dem Träger 2 und der Gleitschicht 3 gewährleistet, so dass der metallische Träger 2 und der thermoplastische Basiskunststoff 4 derart fest aneinander gebunden sind, dass eine Abhebung voneinander auch bei hoher mechanischer Beanspruchung nicht auftritt. Als Haftvermittler 5 kann insbesondere ein höher temperaturbeständiger, modifizierter Schmelzkleber eingesetzt werden.

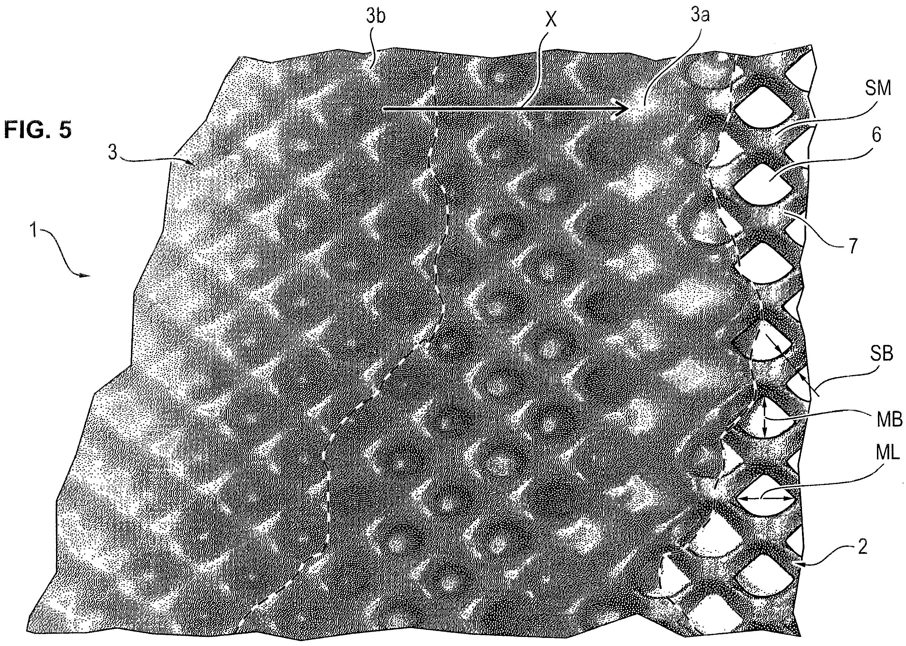

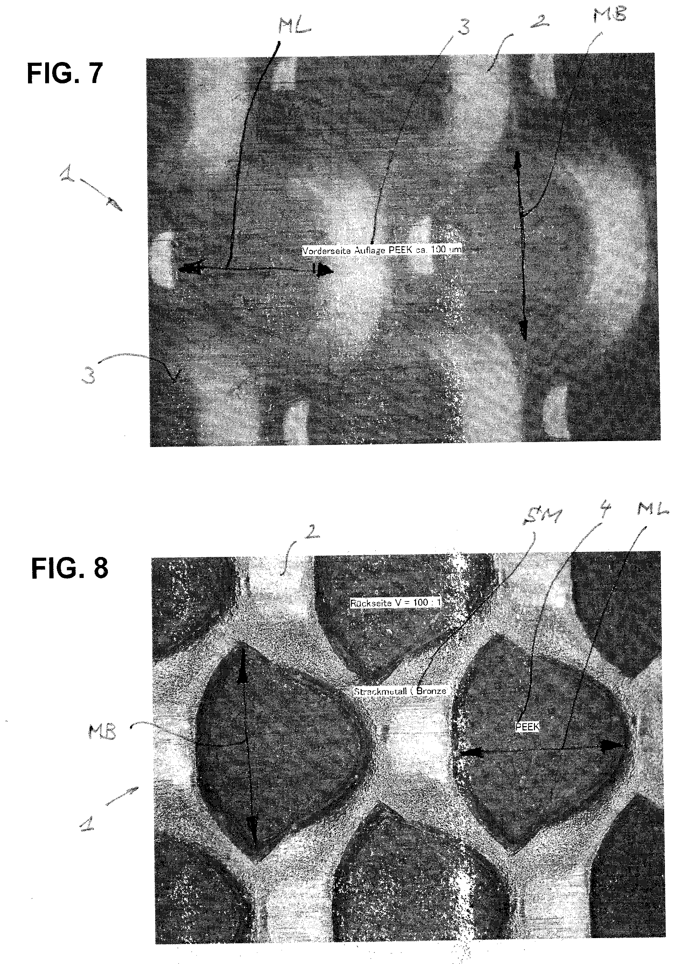

Wie des Weiteren die zweite und auch die dritte Ausführung eines erfindungsgemäß herstellbaren hybriden Metall-Kunststoff-Verbundes 1 gemäß Fig. 2 und 5 bzw. gemäß Fig. 7 und 8 zeigen, kann der bandförmige metallische Träger 2 mit Vorteil aus Streckmetall SM - oft auch als Streckgitter bezeichnet - gebildet sein. Bekanntermaßen ist Streckmetall SM ein Werkstoff mit maschenartigen Öffnungen 6 in der Oberfläche, wie insbesondere durch die in Fig. 5 dargestellte Draufsicht auf die zweite Ausführung des erfindungsgemäß herstellbaren Verbundkörpers 1 veranschaulicht wird. Die Öffnungen 6 entstehen durch versetzte Schnitte ohne Materialverlust unter gleichzeitig streckender Verformung. Die Maschen eines derartigen, aus Tafeln oder Bändern gefertigten gitterartigen Materials sind weder geflochten noch geschweißt. Im Gegensatz zu Lochblech entsteht bei der Herstellung kein Abfall durch herausgeschnittene oder -gestanzte Materialbereiche. Im Streckmetall SM können heute Öffnungen 6 produziert werden, die Maschenlängen ML und Maschenbreiten MB im Bereich von weniger als 1,0 mm bis zu 300 mm aufweisen, wobei das Streckmetall SM freie Querschnitte zwischen 4 und etwa 90 Prozent erreichen kann.

Im Rahmen der Erfindung erscheinen insbesondere Maschenlängen ML und Maschenbreiten MB im Bereich von 1,0 mm bis 15,0 mm als besonders geeignet, wobei eine Stegbreite SB der Stege 7 zwischen den Öffnungen insbesondere im Bereich von 0,3 mm bis 2,0 mm liegen kann und alle bekannten Maschenformen, wie Rautenmasche, Langstegmasche, Sechseckmasche, Rundmasche, Quadratmasche und Sondermasche, zur Anwendung kommen können. Eine Stegdicke SD (Fig. 2) kann bevorzugt in einem Bereich von 0,05 bis 0,8 mm liegen.

Durch diese vorstehend als bevorzugt angegebenen geometrischen Maße können insbesondere freie Querschnitte eingestellt werden, die in einem Bereich von 25 Prozent bis 75 Prozent, vorzugsweise in einem Bereich von 40 Prozent bis 60 Prozent, liegen. Dies sichert einerseits eine ausreichend hohe Bandflexibilität des Trägers 2, welche eine problemlose Fertigung von Rolle zu Rolle ermöglicht, andererseits aber auch einen materialsparenden Einsatz des Hochleistungskunststoffs bei gleichzeitiger Ausbildung eines formschlüssigen Verbunds zwischen dem Träger 2 und der Gleitschicht 3. So kann auch ohne den Einsatz eines Haftvermittlers 5 gewährleistet werden, dass der metallische Träger 2 und der thermoplastische Basiskunststoff 4 derart fest aneinander gebunden sind, dass eine Abhebung voneinander auch bei hoher mechanischer Beanspruchung nicht auftritt.

Bei dem in Fig. 2 und 5 exemplarisch dargestellten Träger 2 handelt es sich um ein Bronze-Streckmetallband mit einer Maschenlänge ML von 2,0 mm, einer Maschenbreite MB von 1,5 mm, einer Stegbreite SB von 0,4 mm und einer Stegdicke SD von 0,18 mm. Auch bei der dritten Ausführung des erfindungsgemäß herstellbaren Metall-Kunststoff-Verbundes 1 wurde ein derartiges Trägermaterial eingesetzt.

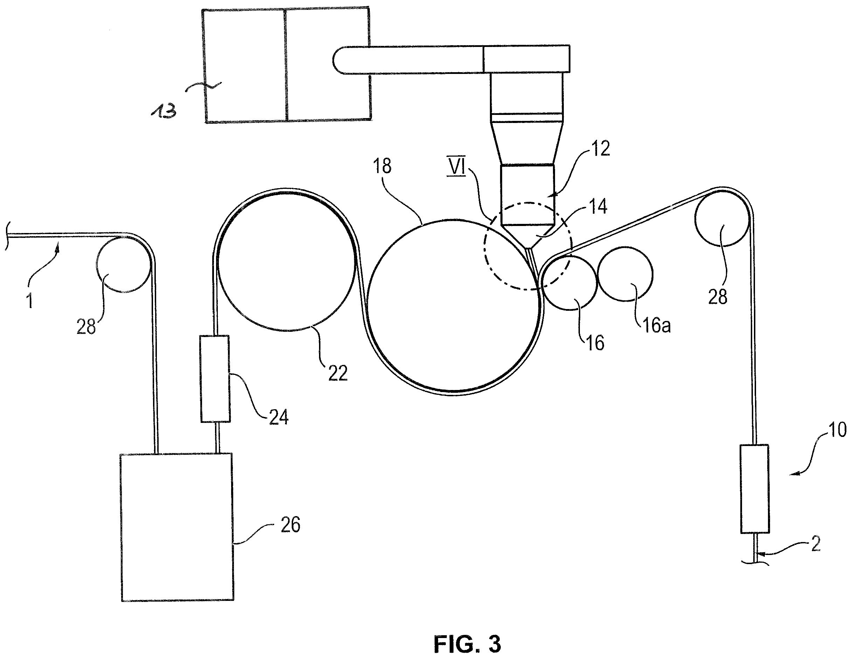

Fig. 3, 4 und 6 veranschaulichen eine Anlage zur Durchführung einer bevorzugten Ausführungsform des erfindungsgemäßen Verfahrens der Band-Direkt-Extrusion, an dessen Anfang der Träger 2 als unbeschichtetes Metallband, und an dessen Ende als Produkt der erfindungsgemäß herstellbare hybride Metall-Kunststoff-Verbund 1 für ein Gleitlager steht.

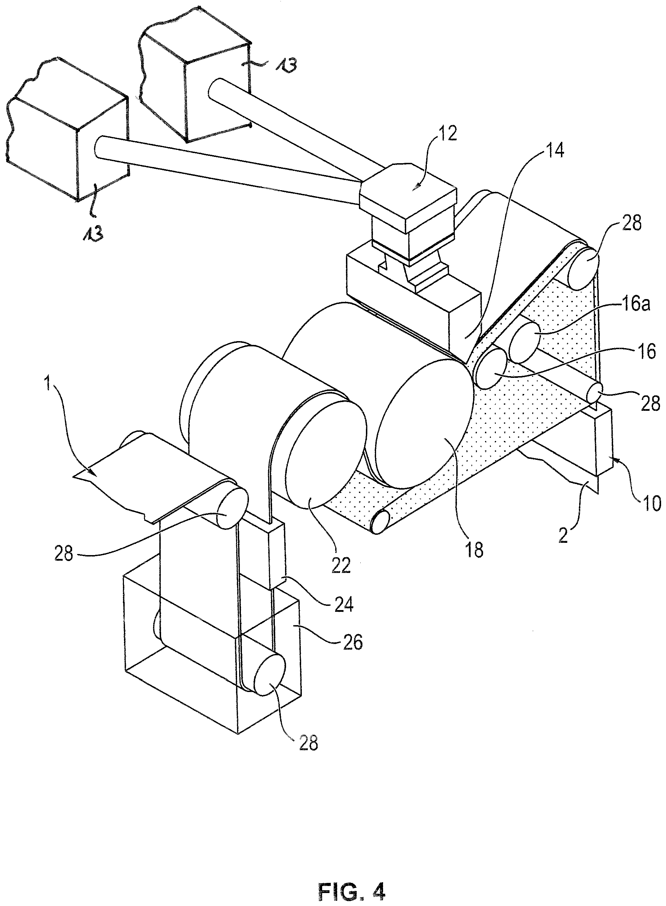

Gemäß Fig. 3 und 4 wird der metallische Träger 2 zunächst durch eine Vorwärmeinrichtung 10 hindurchgeführt. An diese schließt sich eine Beschichtungsstation 12 mit vorgeordnetem Extruder 13 an, in welcher sich eine Breitschlitzdüse 14 befindet, die zum direkten Auftrag des geschmolzenen thermoplastischen Kunststoffes in Form eines flüssigen Kunststofffilmes 3a/3b - siehe Fig. 5 - auf mindestens eine Seite des erhitzten Trägers 2 dient. Unter Breitschlitzdüse 14 wird dabei eine Düse verstanden, bei der die Breitenabmessung des Schlitzes mehrfach größer als die Schlitzweite der Düse ist.

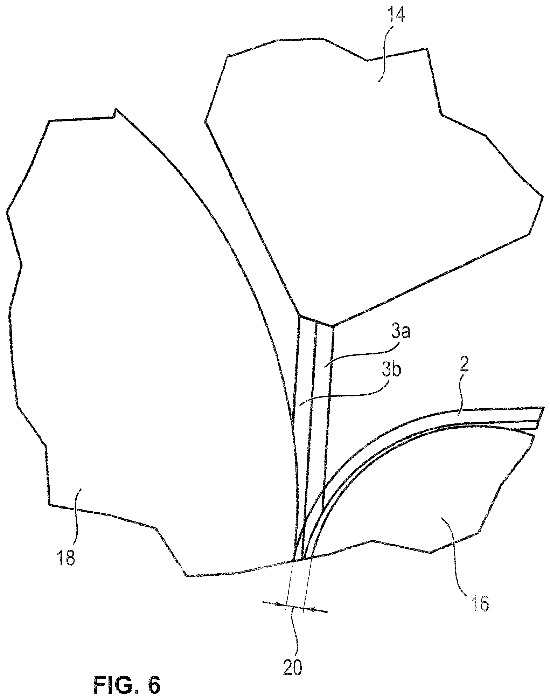

Der Kunststofffilm 3a/3b wird dabei erfindungsgemäß durch eine Breitschlitzdüse 14 aufgetragen, die als sogenannte Tandemdüse ausgebildet ist, wie sie in Fig. 6 in schematisierter Darstellung vergrößert gegenüber Fig. 3 als Einzelheit gezeigt ist. Eine derartige Tandemdüse weist zwei nebeneinander liegende Düsenschlitze auf. Durch den Einsatz der Tandemdüse wird erreicht, dass der die Gleitschicht 3 bildende Kunststofffilm 3a/3b als Doppelschicht ausgebildet ist, wobei allerdings die Grenze zwischen den beiden Filmlagen 3a, 3b nicht scharf ausgebildet sein muss, insofern die beiden Filmlagen 3a, 3b nach ihrer Auftragung noch miteinander verfließen können.

Die zum metallischen Träger 2 hin orientierte erste Schicht 3a kann insbesondere bei einem bandförmigen Träger 2 aus Streckmetall SM eine Verankerung des Kunststoffilmes 3a/3b sicherstellen. Bei einem glatten Stahlband bewirkt sie die den Film 3a/3b stoffschlüssig bindende Adhäsion am Träger 2, insbesondere - sofern vorhanden - an dessen Haftvermittlerschicht 5.

Die äußere zweite Schicht 3b bestimmt u. a. die Gleiteigenschaften sowie die Beständigkeit der Gleitschicht 3 gegenüber äußeren Belastungen.

Zum Erzeugen des Kunststofffilmes 3a/3b können beide Schichten 3a/3b gleichzeitig aus der gleichen Breitschlitzdüse 14 extrudiert werden, wobei durch einen geringen Versatz der einzelnen Austrittsöffnungen der Tandemdüse in Laufrichtung X, die gleichzeitig der Bandlängsrichtung entspricht, auch zwei versetzt hintereinander angeordnete Fließfronten erzielt werden können, wie dies auch in Fig. 5 durch Strichlinien für die Filmschichten 3a, 3b angedeutet ist.

Die Kunststoffe der beiden Filmschichten 3a, 3b können sich in ihrer Zusammensetzung oder auch nur in ihrer Temperatur unterscheiden, wodurch auch ein Viskositätsunterschied und damit ein differenziertes Fließverhalten der Filmschichten 3a, 3b bewirkt werden. Wie bereits erwähnt, ist insbesondere beim Einsatz von Streckmetall-Trägerbändern eine bei der Extrusion vorliegende niedrige Viskosität des - gegebenenfalls compoundierten - Basiskunststoffs von Vorteil, die es ermöglicht, dass die Schmelze das Streckmetall vollständig durchdringt.

Als typisch für die genannte "niedrige Viskosität" seien hier exemplarisch die Werte für einen Kunststoff auf PEEK-Basis genannt, der 20 Masseprozent PTFE in der Gesamtmischung enthält und nach ISO 11443 bei einer Temperatur von 400 °C eine Schmelzviskosität von 340 Pas aufweist, sowie für einen Kunststoff auf PEEK-Basis mit jeweils 15 Masseprozent PTFE und 15 Masseprozent Kohlefasern in der Gesamtmischung, der nach ISO 11443 bei einer Temperatur von 400 °C eine Schmelzviskosität von 260 Pas aufweist. Im Allgemeinen können dabei die Schmelzviskositäten nach ISO 11443 des nicht compoundierten PEEK-Basiskunststoffs bei einer Temperatur von 400 °C im Bereich von 100 Pas bis 5000 Pas liegen.

Eine weitere Möglichkeit, um das für die erfindungsgemäße Extrusion besonders geeignete Fließverhalten zu charakterisieren, ist die Angabe der Schmelze-Volumenfließrate (engl. MVR = Melt Volume-flow Rate). Diese nach ISO 1133 mittels eines Kapillarrheometers ermittelte Größe wird bei bestimmten Druck- und Temperaturbedingungen bestimmt und ist ebenfalls ein Maß für die Viskosität einer Schmelze des - gegebenenfalls compoundierten - Basiskunststoffs. Zu ihrer Bestimmung wird das Material (Granulat oder Pulver) in einem beheizbaren Zylinder aufgeschmolzen und unter einem durch die Auflagelast entstehenden Druck durch eine definierte Düse (Kapillare) gedrückt. Ermittelt wird das austretende Volumen der Polymerschmelze als Funktion der Zeit. Die Schmelze-Volumenfließrate eines - gegebenenfalls compoundierten - Basiskunststoffs 4 sollte bei einer Auflagelast von 5 kg und einer Temperatur von 380 °C kleiner als 20 cm³/10 min, vorzugsweise kleiner als 8 cm³/10 min, sein.

Als typisch für den genannten Schmelzflussindex nach ISO 1133 sei hier ein exemplarischer MVR-Wert für einen Kunststoff auf PEEK-Basis genannt, der 10 Masseprozent PTFE, 10 Masseprozent Graphit und 10 Masseprozent Kohlefasern (restliche 70 Masseprozent: PEEK) in der Gesamtmischung enthält und nach ISO 11443 bei einer Auflagelast von 5 kg und einer Temperatur von 380 °C eine Größe von 2,5 cm³/10 min aufweist.

Im technologischen Ablauf sind hinter der Breitschlitzdüse 14 zwei aneinandergedrückte Rollen 16, 18 vorgesehen. Die eine Rolle 16, welche nachfolgend als Andrückrolle 16 bezeichnet wird, kann zum Ausgleich eventuell auftretender Toleranzen in der Filmdicke einen Mantel aus gummielastischem Material aufweisen, wobei ihre Andrückwirkung durch eine weitere Rolle 16a zusätzlich verstärkt werden kann, so dass ein Andrückrollenpaar 16, 16a gebildet ist. Die andere Rolle 18, die im Folgenden als Laminatorrolle 18 bezeichnet wird, ist mittels in ihrem Inneren strömenden Kühlwassers gekühlt. Der metallische Träger 2 wird mit dem noch flüssigen Kunststofffilm 3a/3b durch einen Spalt 20 zwischen den beiden Rollen 16, 18 hindurchgeführt, wobei der Film 3a/3b an den Träger 2 mit einer auf die Trägerbreite bezogenen Kraft, die bevorzugt mindestens 60 N/mm betragen sollte, angedrückt wird. Durch die Laminatorrolle 18 wird der Kunststofffilm 3a/3b abgekühlt, wobei die Abkühlgeschwindigkeit bevorzugt bei höchstens 400 W/m² °C liegen sollte.

Die Abkühlung dient dazu, dass zumindest die erste Filmschicht 3a, während sie an der Laminatorrolle 18 anliegt, in den festen Zustand überführt wird, bevor der Film 3a/3b von der Laminatorrolle 18 abgelöst wird. Die Temperatur auf der Oberfläche des aufgetragenen Kunststofffilms 3a/3b sollte dabei bevorzugt mindestens um 30 K unter dem Schmelzpunkt des Kunststoffes liegen. Hinter der Laminatorrolle 18 ist in Bandlaufrichtung eine Umlenkrolle angeordnet, die wie die Laminatorrolle 18 ebenfalls als Kühlrolle 22 ausgebildet ist und gewährleistet, dass der gesamte Film 3a/3b, also auch die zweite Filmschicht 3b, zur Erstarrung gebracht wird.

Durch Variation der Umschlingungswinkel von Laminatorrolle 18 und Kühlrolle 22 sowie der Bandgeschwindigkeit kann der Kühlprozess entsprechend der Dicke und Art des Metallbandes, der Dicke und Art der Kunststofffilmschichten 3a, 3b und entsprechend der Temperatur der Kunststoffschmelze mit Vorteil feinfühlig gesteuert werden. Insbesondere kann so verhindert werden, dass eine beim Abkühlen des Kunststofffilmes 3a/3b auftretende Schrumpfung zu einem Ablösen des Kunststofffilmes 3a/3b vom Träger 2 führen könnte.

Insbesondere zur Rekristallisation und ggf. Vergrößerung von amorphen Bereichen des teilkristallinen Basiskunststoffs 4 bzw. des Compounds in der Gleitschicht 3 kann bevorzugt eine Nachbehandlung des beschichteten metallischen Trägers 2 durch Erhitzung und eine anschließende rasche Abkühlung in einem Wasserbad durchgeführt werden. Dies erfolgt mittels der in Fig. 3 und 4 mit den Bezugszeichen 24 bezeichneten Heizeinrichtung und der nachgeschalteten, aus einem Wasserbad bestehenden, mit dem Bezugszeichen 26 bezeichneten Kühleinrichtung. Bei der abschließenden Nachbehandlung wird das beschichtete Metallband insbesondere nochmals auf eine Temperatur im Bereich der Schmelztemperatur erhitzt und im Wasserbad schnell auf eine Temperatur im Bereich von 25 °C bis 50 °C abgekühlt. Bei den in den genannten Figuren mit den Bezugszeichen 28 bezeichneten Teilen handelt es sich um einfache Umlenkrollen.

Die Herstellung der in Fig. 7 und 8 gezeigten dritten Ausführung eines erfindungsgemäß herstellbaren Verbundkörpers 1 erfolgte unter folgenden Prozessbedingungen:
Material für den Träger 2: Bronze-Streckmetall (wie für die zweite Ausführung)
Material für die Gleitschicht 3: PEEK (Type VESTAKEEP® 4000 GF30 der Firma Evonik, die Werkstoffdaten sind in Tabelle 1 dargestellt)
Vortrocknung PEEK: 4 h, 160 °C
Extrudertemperatur: 420 °C
Masse-Temperatur in der Pumpe: 422 °C
Drehzahl Pumpe: 31 U/min
Anlagengeschwindigkeit: 2,5 m/min.
Düsenbreite: 450 mm
Spaltweite der Düse: 1 mm
Düsendruck: 80 bar

**Tabelle 1: Werkstoffdaten VESTAKEEP® 4000 GF 30**

| Physikalische und thermische Eigenschaften sowie Brandverhalten: | Prüfbedingung | Prüfnorm | Einheit | Wert |
|---|---|---|---|---|
| Dichte | 23 °C | ISO 1183 | g/cm³ | 1,50 |
| Schmelzbereich | DSC, 2. Aufheizen | | °C | ca. 340 |
| Volumenfließrate (MVR) | 380 °C/5 kg | ISO 1133 | cm³/10min | 2 |
| | 400°C/10 kg | ISO 1133 | cm³/10min | - |
| Formbeständigkeit in der Wärme | | ISO 75-1/2 | | |
| Verfahren A | 1,80 MPa | | °C | 312 |
| Verfahren B | 0,45 MPa | | °C | 335 |
| Vicat-Erweichungstemperatur | | ISO 306 | | |
| Verfahren A | 10 N | | °C | 340 |
| Verfahren B | 50 N | | °C | 335 |
| Thermischer | 23 °C - 55 °C | ISO 11359 | | |
| Längenausdehnungskoeffizient | längs | | 10⁻⁴ K⁻¹ | 0,3 |
| Sauerstoffindex | 3,2 mm | ISO 4589 | % | 45 |
| Brennbarkeit nach UL94 | 3,2 mm | IEC 60695 | | V-0 |
| Glühdrahtprüfung | GWIT 2 mm | IEC 60695.2-12/13 | °C | 825 |
| | GWIT 2 mm | IEC 60695.2-12/13 | | 960 |
| Wasseraufnahme bei Sättigung | 23 °C | ISO 62 | % | 0,4 |
| Mechanische Eigenschaften: | | | | |
| Zugversuch | 50 mm/min | ISO 527-1/-2 | | |
| Streckspannung | | | MPa | |
| Streckdehnung | | | % | |
| Bruchdehnung | | | % | |
| Zugversuch | 5 mm/min | ISO 527-1/-2 | | |
| Zugfestigkeit | | | MPa | 165 |
| Bruchdehnung | | | % | 2 |
| Zugmodul | | ISO 527-1/-2 | MPa | 11000 |
| CHARPY-Schlagzähigkeit | 23 °C | ISO 179/1 eU | kJ/m² | 70 C |
| | - 30 °C | | kJ/m² | 75 C |
| CHARPY-Kerbschlagzähigkeit | 23 °C | ISO 179/1 eA | kJ/m² | 10 C |
| | - 30 °C | | kJ/m² | 9C |
| Elektrische Eigenschaften: | | | | |
| Vergleichszahl der Kriechwegbildung | CTI | IEC 60112 | - | 200 |
| Prüflösung A | 100-Tropfen-Wert | | | 175 |
| Elektrische Durchschlagfestigkeit | K20/P50 | IEC 60243-1 | kV/mm | 16 |
| | K20/K20 | | kV/mm | 19 |
| Dielektrizitätszahl | 50 Hz | IEC 60250 | - | 3,4 |
| | 1 kHz | | - | 3,3 |
| | 1 MHz | | - | 3,3 |
| Dielektrischer Verlustfaktor | 50 Hz | IEC 60250 | - | |
| | 1 kHz | | - | 0,002 |
| | 1 MHz | | - | 0,004 |
| Durchgangswiderstand | | IEC 60093 | Ohm | 10¹⁴ |
| spez. Durchgangswiderstand | | IEC 60093 | Ohm*cm | 10¹⁵ |
| Oberflächenwiderstand | | IEC 60093 | Ohm | 10¹⁴ |
| spez. Oberflächenwiderstand | | IEC 60093 | Ohm | 10¹⁵ |

| | | | | |
|---|---|---|---|---|
| C = vollständiger Bruch (CHARPY) | | | | |

Im Hinblick auf die vorstehend genannte Pumpe sei erwähnt, dass durch den Einsatz einer Pumpe, insbesondere einer Zahnradpumpe, konventionelle Ein- und Doppelschneckenextruder zu Extrusionssystemen mit optimierter Dosiergenauigkeit, breiterem Anfahrfenster und gesteigerter Wirtschaftlichkeit erweitert werden. Die Anordnung der Pumpe erfolgt zwischen Extruder 13 und Extrusionswerkzeug. Die Pumpe entlastet hierbei den Extruder 13 und ist für die Verfahrensschritte Druckaufbau und Dosieren verantwortlich. Die primären Aufgaben des Extruders 13, wie Aufschmelzen, Homogenisieren, ggf. Compoundieren und Entgasen, können somit entkoppelt von diesen Verfahrensschritten durchgeführt werden. Die durch den Pumpeneinsatz sich ergebenden Vorteile bestehen dabei insbesondere in einer Steigerung der Produktivität um bis zu 25%, in einer Senkung der Material- und Betriebskosten um bis zu 30% und in einer Reduzierung der Ausschussproduktion bis zu 50%. Durch die Pumpe können hinter dem Extruder 13 herrschende Druckschwankungen auf bis zu 10 % abgesenkt werden, wobei eine Druck-Drehzahlregelung des Extruders 13 eine konstante Füllung der Pumpe gewährleistet und produktabhängige Förderschwankungen des Extruders 13 durch automatische Veränderung der Schneckendrehzahl ausgleicht.

Es wurde ein Verbundkörper 1 mit einer Gleitschicht 3 hergestellt, die eine mittlere Dicke DG von etwa 100 µm aufwies. Der bandförmige metallische Träger 2 und der thermoplastische Werkstoff der Gleitschicht 3 waren darin derart fest aneinander gebunden, dass eine Abhebung voneinander auch bei hoher mechanischer Beanspruchung nicht auftreten konnte, wobei die Gleitschicht 3 nur einen minimalen Reibungswiderstand aufwies.

Im Zusammenhang mit der in Fig. 7 gezeigten Draufsicht (Vorderseite) und mit der in Fig. 8 gezeigten Unteransicht (Rückseite) der dritten Ausführung eines erfindungsgemäß herstellbaren Verbundkörpers 1 ist auch noch Folgendes festzustellen:
Das Streckmetall SM hat eine rauere Seite und eine glattere Seite. Die glatte Seite ist die, auf der zur Perforierung eingesetzte Werkzeuge, z. B. Messer, beim Perforieren eintauchen. Es hat sich als vorteilhaft erwiesen, das Streckmetall SM von dieser glatten Seite (Fig. 7) aus zu beschichten. Durch die Laminatorrolle 18 kann dann auch bewirkt werden, dass der Kunststoff so weit durchfließt, er die Rauheiten des Trägers bedeckt, so dass eine glatte Rückseite (Fig. 8) entsteht. Dies ist insbesondere aus Fig. 2 ersichtlich. Die Auflagedicke des Kunststoffes ist beliebig steuerbar. Die stoffschlüssige Verbindung Streckmetall SM / Kunststoff wird dabei durch eine bei der Herstellung des Streckmetalls SM erfolgende Ausbildung von ähnlich wie Nietköpfe geformten Ankern bewirkt.

Beispielsweise kann anstelle von Streckmetall auch ein Drahtgewebe eingesetzt werden.

Beispielsweise kann in vorteilhafter Weise vorgesehen sein, dass eine beidseitige Beschichtung des Trägers 2 mit Gleitschicht 3 erfolgt, wobei im Falle des Einsatzes eines Streckgitters oder eines anderen Trägers 2 mit freiem Querschnitt ohnehin eine Einbettung bzw. Ummantelung des Trägers 2 in bzw. durch die Gleitschicht 3 erfolgt. Die gesamte Gleitschicht 3 kann dann vorzugsweise um bis zu 5,0 mm dicker sein als die Trägerdicke - so bei symmetrischer Ausbildung bis zu 2,5 mm dick auf jeder Seite des Trägers 2. Die Gesamtdicke DA des erfindungsgemäß herstellbaren Metall-Kunststoff-Verbundes 1 sollte vorzugsweise nur so groß sein, dass der Metall-Kunststoff-Verbund 1 noch als Band auf- und abgerollt werden kann. Generell sind für die Dicke DG der Gleitschicht 3 im Sinne eines materialsparenden Einsatzes des kostenintensiven Hochleistungskunststoffs jedoch geringe Werte, d. h. Werte unter 1,2 mm, bevorzugt, wobei die untere Dickengrenze durch die möglichen Minimalwerte der Technologie des Auftrags mittels der Breitschlitzdüse 14 bestimmt wird. Sie kann beispielsweise bei 25 bis 30 µm liegen. In diesem Fall liegt auch im Hinblick auf einen später in einem Gleitlager möglichenfalls auftretenden Verschleiß der Gleitschicht 3 noch ein optimaler Wert vor. Als Dicke DG der Gleitschicht 3 wird dabei der Abstand zwischen Gleitschichtoberfläche und Oberfläche des Trägers 2 angesehen. Im Falle von schwankenden Werten - beispielsweise wie in Fig. 2 dargestellt - durch eine gekrümmte Trägeroberfläche wird dabei mit gemittelten Werten gerechnet. Gleiches gilt gegebenfalls auch für die Gesamtdicke DA des erfindungsgemäß herstellbaren Metall-Kunststoff-Verbundes 1, als die der Abstand zwischen Ober- und Unterseite des Verbundkörpers 1 anzusehen ist.

Als Haftvermittler 5 kann auch ein bis zur Schmelztemperatur des Basiskunststoffs temperaturbeständiger, auf einem Epoxidharz basierender, im Coil-Coating-Verfahren auf den Träger 2 aufbringbarer Schmelzkleber eingesetzt werden.

Ein nach dem erfindungsgemäßen Verfahren herstellbarer, hybrider Verbundkörper 1 umfasst einen bandförmigen metallischen Träger 2 und eine darauf aufgetragene Gleitschicht 3, die einen thermoplastischen Basiskunststoff 4 enthält, wobei der thermoplastische Basiskunststoff 4 ein extrudierbarer Hochleistungskunststoff ist und die Schicht 3 als aus zwei Filmschichten extrudierte Doppelschicht 3a/3b ausgebildet ist. Das Lochband oder Streckgitter SM kann mithin profiliert - d. h. insbesondere als Formteil - vorliegen. Der bevorzugte Anwendungszweck eines derartigen erfindungsgemäß herstellbaren Verbundes 1 ist nicht auf tribotechnische Einsatzfälle beschränkt. Das Lochband oder Streckgitter SM muss nicht aus Metall, sondern kann auch aus Kunststoff, insbesondere aus einem Hochleistungskunststoff, oder z. B. aus einem keramischen Werkstoff bestehen. In einer alternativen, nicht erfindungsgemäßen Ausführung, in der an Stelle eines Hochleistungskunststoffs ein Massenkunststoff oder technischer Kunststoff eingesetzt wird, kann die Extrusionstemperatur niedriger liegen. Der thermoplastische, gegebenenfalls mit reibungsverbessernden und/oder verschleißmindernden Zusätzen compoundierte, Basiskunststoff 4 sollte dann bei einer Auflagelast von 5 kg und einer bei der Extrusion vorliegenden Temperatur - also bei der vergleichsweise gegenüber Hochleitungskunststoffen niedrigeren Verarbeitungstemperatur - eine Schmelze-Volumenfließrate nach ISO 1133 von weniger als 20 cm³/10 min, vorzugsweise von weniger als 8 cm³/10 min, beispielsweise von 2,5 cm³/10 min, aufweisen. Entsprechendes gilt auch für den genannten Schmelzflussindex nach ISO 1133.

### Bezugszeichen

- 1: Metall-Kunststoff-Verbund
- 2: Träger von 1
- 3: Gleitschicht von 1
- 3a: erste Filmschicht von 3
- 3b: zweite Filmschicht von 3
- 4: Basiskunststoff in 3
- 5: Haftvermittler
- 6: Öffnung in 2, Masche von SM
- 7: Stege zwischen Öffnungen 6

- 10: Vorwärmeinrichtung für 2
- 12: Beschichtungsstation für 2
- 13: Extruder
- 14: Breitschlitzdüse in 12
- 16, 16a: Andrückrolle
- 18: Laminatorrolle
- 20: Spalt zwischen 16 und 18
- 22: Kühlrolle
- 24: Heizeinrichtung
- 26: Kühleinrichtung
- 28: Umlenkrolle
- DA: (mittlere) Dicke von 1
- DG: (mittlere) Dicke von 3
- ML: Maschenlänge von 6
- MB: Maschenbreite von 6
- SB: Stegbreite von 7
- SD: Stegdicke von 7
- SM: Streckmetall
- X: Bandlängsrichtung von 1, Laufrichtung

## Patentansprüche

1. Verfahren zur Herstellung eines hybriden Metall-Kunststoff-Verbundes (1) für ein Gleitlager, umfassend das Auftragen einer Gleitschicht (3), die einen thermoplastischen Basiskunststoff (4) enthält, auf einen bandförmigen metallischen Träger (2), wobei als thermoplastischer Basiskunststoff (4) ein extrudierbarer Hochleistungskunststoff eingesetzt wird, wobei das Auftragen der Gleitschicht (3) auf den metallischen Träger (2) bei Temperaturen über 280 °C mittels einer Breitschlitzdüse (14) in einem Band-Direkt-ExtrusionsVerfahren vorgenommen wird, und wobei die Gleitschicht (3) als aus zwei Filmschichten (3a, 3b) bestehende Doppelschicht (3a/3b) ausgebildet wird, deren Filmschichten (3a, 3b) gleichzeitig mittels einer Breitschlitzdüse (14) aufgetragen werden, die als Tandemdüse mit zwei nebeneinander liegenden Düsenschlitzen ausgebildet ist.

2. Verfahren nach Anspruch 1,
**dadurch gekennzeichnet, dass** das Auftragen der Gleitschicht (3) auf den metallischen Träger (2) bei Temperaturen im Bereich zwischen 320 °C und 410 °C, vorzugsweise im Bereich zwischen 350 °C und 390 °C, vorgenommen wird.

3. Verfahren nach Anspruch 1 oder 2,
**dadurch gekennzeichnet, dass** sich die Filmschichten (3a, 3b) hinsichtlich ihrer Zusammensetzung, Temperatur, Viskosität und/oder Fließverhaltens voneinander unterscheiden.

4. Verfahren nach einem der Ansprüche 1 bis 3,
**dadurch gekennzeichnet, dass** der thermoplastische Basiskunststoff (4) zu mehr als 50 Masseprozent, bevorzugt zu mehr als 70 Masseprozent, besonders bevorzugt zu mehr als 85 Masseprozent, in der Gleitschicht (3) enthalten ist.

5. Verfahren nach einem der Ansprüche 1 bis 4,
**dadurch gekennzeichnet, dass** der thermoplastische Basiskunststoff (4) ein Polyarylenetherketon (PEAK), wie ein Polyphenylen, z. B. Poly[di-(oxy-1,4-phenylen)carbonyl-1,4-phenylen] (Polyetheretherketon, PEEK), Poly[oxy-1,4-phenylenoxy-di-(1,4-phenylencarbonyl-1,4-phenylen] (Polyetheretherketonketon, PEEKK) oder Poly[oxy-1,4-phenylencarbonyl-1,4-phenylenoxy-di-(1,4-phenylencarbonyl)-1,4-phenylen] (Polyetherketonetherketonketon, PEKEKK), ist.

6. Verfahren nach Anspruch 5,
**dadurch gekennzeichnet, dass** der thermoplastische Basiskunststoff (4) ein Polyetheretherketon (PEEK) ist, das eine Schmelzviskosität bei einer Temperatur von 400 °C im Bereich von 100 Pas bis 5000 Pas nach ISO 11443 aufweist

7. Verfahren nach einem der Ansprüche 1 bis 6,
**dadurch gekennzeichnet, dass** der thermoplastische Basiskunststoff (4) der Gleitschicht (3) formschlüssig und/oder stoffschlüssig mit dem bandförmigen metallischen Träger (2) verbunden wird.

8. Verfahren nach einem der Ansprüche 1 bis 7,
**dadurch gekennzeichnet, dass** in die Gleitschicht (2) außer dem thermoplastischen Basiskunststoff (4) ein oder mehrere weitere fluorhaltige Kunststoffe, wie Polytetrafluorethylen (PTFE), wie Ethylen-Tetrafluorethylen (ETFE), Polytrifluorethylen (PCTFE) oder Perfluorethylenpropylen (FEP), oder fluorfreie, insbesondere technische Kunststoffe, oder andere reibungsverbessernde und/oder verschleißmindernde, insbesondere anorganische, Zusätze, wie Molybdändisulfid, Graphit, Bariumsulfat, Zinksulfid, Bleiborosilikat, Kohle-, Glas- und/oder Keramikfasern, eingebracht werden.

9. Verfahren nach Anspruch 8,
**dadurch gekennzeichnet, dass** die Teilchengröße der reibungsverbessernden und verschleißmindernde Zusätze kleiner ist als 1000 nm und insbesondere im Bereich von 3 nm bis 300 nm, vorzugsweise im Bereich von 5 nm bis 150 nm, besonders bevorzugt im Bereich von 15 nm bis 80 nm, liegt.

10. Verfahren nach einem der Ansprüche 1 bis 9,
**dadurch gekennzeichnet, dass** der thermoplastische, gegebenenfalls mit reibungsverbessernden und/oder verschleißmindernden Zusätzen compoundierte, Basiskunststoff (4) bei einer Auflagelast von 5 kg und einer Temperatur von 380 °C eine Schmelze-Volumenfließrate nach ISO 1133 von weniger als 20 cm³/10 min, vorzugsweise von weniger als 8 cm³/10 min, beispielsweise von 2,5 cm³/10 min, aufweist.

11. Verfahren nach einem der Ansprüche 1 bis 10,
**dadurch gekennzeichnet, dass** ein metallischer Träger (2) aus kalt- oder warmgewalztem Bandstahl, bevorzugt in den Qualitäten DC 01 bis DC 04 nach DIN EN 10 139, aus Fein- oder Feinstblech oder aus einem Edelstahl-, Aluminium- oder Buntmetallband eingesetzt wird.

12. Verfahren nach einem der Ansprüche 1 bis 11,
**dadurch gekennzeichnet, dass** als metallischer Träger (2) ein profilierter Träger (2), ein Lochblech oder ein Streckmetall (SM) eingesetzt wird.

13. Verfahren nach einem der Ansprüche 1 bis 12,
**dadurch gekennzeichnet, dass** zwischen dem bandförmigen metallischen Träger (2) und der Gleitschicht (3) eine Haftvermittlerschicht (5) angeordnet wird, deren Schichtdicke insbesondere im Bereich von 4 µm bis 28 µm, bevorzugt im Bereich von 8 µm bis 15 µm, liegt.

14. Verfahren nach Anspruch 13,
**dadurch gekennzeichnet, dass** als Haftvermittler (5) ein bis zur Schmelztemperatur des Basiskunststoffs temperaturbeständiger, im Coil-Coating-Verfahren, insbesondere als wässrige Dispersion eines thermoplastischen Polyurethans in Kombination mit einer mehrphasigen, selbstvernetzenden Acrylatdispersion oder ein auf Epoxidharz basierender, auf den Träger (2) aufbringbarer Schmelzkleber eingesetzt wird.

15. Verfahren nach einem der Ansprüche 1 bis 14,
**dadurch gekennzeichnet, dass** bei Einsatz eines bandförmigen metallischen Trägers (2), der aus Streckmetall (SM) mit darin befindlichen, durch Stege (7) voneinander getrennten Maschenöffnungen (6) besteht, die Öffnungen (6) jeweils eine Maschenlänge (ML) und eine Maschenbreite (MB) im Bereich von 1,0 mm bis 15,0 mm aufweisen, wobei jeweils vorzugsweise eine Stegbreite (SB) der Stege (7) im Bereich von 0,3 mm bis 2,0 mm und eine Stegdicke (SD) bevorzugt in einem Bereich von 0,05 mm bis 0,8 mm liegen.

16. Verfahren nach einem der Ansprüche 1 bis 15,
**dadurch gekennzeichnet, dass** der bandförmige Träger (2) vor seiner Beschichtung mit der Gleitschicht (3) auf eine Temperatur über dem Schmelzpunkt des thermoplastischen - gegebenenfalls compoundierten - Basiskunststoffs (4) vorgewärmt wird.

17. Verfahren nach einem der Ansprüche 1 bis 16,
**dadurch gekennzeichnet, dass** der beschichtete bandförmige Träger (2) und die Gleitschicht (3) zur Erstarrung der Gleitschicht (3) - beginnend mit ihrer Auftragung durch die Breitschlitzdüse (14) - mittels einer Laminatorrolle (18) unter Druck auf eine Temperatur von mindestens 30 K unter dem Schmelzpunkt des - gegebenenfalls compoundierten - Basiskunststoffs (4) abgekühlt werden.

18. Verfahren nach Anspruch 17,
**dadurch gekennzeichnet, dass** der beschichtete bandförmige Träger (2) und die erstarrte Gleitschicht (3) anschließend nochmals auf eine Temperatur im Bereich des Schmelzpunkts des - gegebenenfalls compoundierten - Basiskunststoffs (4) erwärmt und abschließend im Wasserbad auf eine Temperatur im Bereich von 25 °C bis 50 °C abgekühlt werden.

## Claims

1. Process for the production of a hybrid metal-plastic composite (1) for a sliding bearing, comprising the application of a friction-reducing layer (3) which comprises a thermoplastic base (4) on a metallic support strip (2), where an extrudable high-performance plastic is used as thermoplastic base (4), where the application of the friction-reducing layer (3) to the metallic support (2) is undertaken at temperatures above 280°C by means of a slot die (14) in a direct strip extrusion process, and where the friction-reducing layer (3) takes the form of double layer (3a/3b) composed of two film layers (3a, 3b), and these film layers (3a, 3b) are applied simultaneously by means of a slot die (14) which takes the form of tandem die with two mutually adjacent die slots.

2. Process according to Claim 1,
**characterized in that** the application of the friction-reducing layer (3) to the metallic support (2) is undertaken at temperatures in the range from 320°C to 410°C, preferably in the range from 350°C to 390°C.

3. Process according to Claim 1 or 2,
**characterized in that** the film layers (3a, 3b) differ from one another in respect of their composition, temperature, viscosity and/or rheology.

4. Process according to any of Claims 1 to 3,
**characterized in that** the friction-reducing layer (3) comprises more than 50 percent by mass, preferably more than 70 percent by mass, particularly preferably more than 85 percent by mass, of the thermoplastic base (4).

5. Process according to any of Claims 1 to 4,
**characterized in that** the thermoplastic base (4) is polyaryleneetherketone (PEAK), for example a polyphenylene, e.g. poly[di(oxy-1,4-phenylene)carbonyl-1,4-phenylene] (polyetheretherketone, PEEK), poly[oxy-1,4-phenyleneoxydi(1,4-phenylenecarbonyl-1,4-phenylene] (polyetheretherketoneketone, PEEKK) or poly[oxy-1,4-phenylenecarbonyl-1,4-phenyleneoxydi(1,4-phenylenecarbonyl)-1,4-phenylene] (polyetherketoneetherketoneketone, PEKEKK).

6. Process according to Claim 5,
**characterized in that** the thermoplastic base (4) is a polyetheretherketone (PEEK) with melt viscosity in the range from 100 Pas to 5000 Pas in accordance with ISO 11443 at 400°C.

7. Process according to any of Claims 1 to 6,
**characterized in that** the thermoplastic base (4) of the friction-reducing layer (3) is connected to the metallic support strip (2) by interlocking and/or by coherent bonding.

8. Process according to any of Claims 1 to 7,
**characterized in that** materials introduced into the friction-reducing layer (2), other than the thermoplastic base (4), are one or more other fluorine-containing plastics, for example polytetrafluoroethylene (PTFE), for example ethylene-tetrafluoroethylene (ETFE), polytrifluoroethylene (PCTFE) or perfluoro(ethylene-propylene) (FEP) or fluorine-free plastics, in particular engineering plastics, or other, in particular inorganic, additions which improve frictional properties and/or which reduce wear, for example molybdenum disulphide, graphite, barium sulphate, zinc sulphide, lead borosilicate, carbon fibres, glass fibres and/or ceramic fibres.

9. Process according to Claim 8,
**characterized in that** the particle size of the additions that improve frictional properties and reduce wear is smaller than 1000 nm and in particular in the range from 3 nm to 300 nm, preferably in the range from 5 nm to 150 nm, particularly preferably in the range from 15 nm to 80 nm.

10. Process according to any of Claims 1 to 9,
**characterized in that** the melt volume flow rate in accordance with ISO 1133 of the thermoplastic base, optionally compounded with additions that improve frictional properties and/or reduce wear is below 20 cm³/10 min, preferably below 8 cm³/10 min, for example 2.5 cm³/10 min, with an applied load of 5 kg and at a temperature of 380°C.

11. Process according to any of Claims 1 to 10,
**characterized in that** a metallic support (2) is used that is made of cold- or hot-rolled steel strip, preferably in the qualities DC 01 to DC 04 in accordance with DIN EN 10 139, made of thin or very thin sheet or made of stainless-steel strip, aluminium strip or non-ferrous-metal strip.

12. Process according to any of Claims 1 to 11,
**characterized in that** a profiled support (2), a perforated sheet or an expanded metal (EM) is used as metallic support (2).

13. Process according to any of Claims 1 to 12,
**characterized in that** between the metallic support strip (2) and the friction-reducing layer (3) an adhesion-promotor layer (5) is arranged, the layer thickness of which is in particular in the range from 4 µm to 28 µm, preferably in the range from 8 µm to 15 µm.

14. Process according to Claim 13,
**characterized in that** adhesion promotor (5) used comprises a hotmelt adhesive which is heat-resistant up to the melting point of the base plastic and can be applied to the support (2) by the coil-coating process, in particular in the form of epoxy-resin-based hotmelt adhesive or of an aqueous dispersion of a thermoplastic polyurethane in combination with a multiphase, self-crosslinking acrylate dispersion.

15. Process according to any of Claims 1 to 14,
**characterized in that** when a metallic support strip (2) is used which is made of expanded metal (EM) with, situated therein, mesh apertures (6) separated from one another by fillets (7), the apertures (6) respectively have a mesh length (ML) and a mesh width (MW) in the range from 1.0 mm to 15.0 mm, where respectively preferably a fillet width (FW) of the fillets (7) is in the range from 0.3 mm to 2.0 mm and a fillet thickness (FT) is preferably in the range from 0.05 mm to 0.8 mm.

16. Process according to any of Claims 1 to 15,
**characterized in that** before the support strip (2) is coated with the friction-reducing layer (3) it is preheated to a temperature above the melting point of the - optionally compounded - thermoplastic base (4).

17. Process according to any one of Claims 1 to 16,
**characterized in that**, for the solidification of the friction-reducing layer (3) - from the time of application thereof via the slot die (14) - the coated support strip (2) and the friction-reducing layer (3) are cooled by means of a laminator roll (18) under pressure to a temperature that is at least 30 K below the melting point of the - optionally compounded - base plastic (4).

18. Process according to Claim 17,
**characterized in that** the coated support strip (2) and the solidified friction-reducing layer (3) are then again heated to a temperature in the region of the melting point of the - optionally compounded - base plastic (4) and finally are cooled in the water bath to a temperature in the range from 25°C to 50°C.

## Revendications

1. Procédé pour la fabrication d'un composite (1) hybride métal-matériau synthétique pour un palier lisse, comprenant l'application d'une couche de glissement (3), qui contient un matériau synthétique de base (4) thermoplastique, sur un support (2) métallique sous forme de bande, un matériau synthétique haute performance pouvant être extrudé étant utilisé comme matériau synthétique de base (4) thermoplastique, l'application de la couche de glissement (3) sur le support (2) métallique étant réalisée à des températures supérieures à 280°C au moyen d'une filière (14) à fente large dans un procédé d'extrusion directe en bande et la couche de glissement (3) étant réalisée sous forme d'une double couche (3a/3b), constituée par deux couches de film (3a, 3b), dont les couches de film (3a, 3b) sont appliquées simultanément au moyen d'une filière (14) à fente large qui est réalisée sous forme de filière tandem présentant deux fentes de filière adjacentes.

2. Procédé selon la revendication 1, **caractérisé en ce que** l'application de la couche de glissement (3) sur le support métallique (2) est réalisée à des températures dans la plage entre 320°C et 410°C, de préférence dans la plage entre 350°C et 390°C.

3. Procédé selon la revendication 1 ou 2, **caractérisé en ce que** les couches de film (3a, 3b) sont différentes l'une de l'autre en ce qui concerne leur composition, leur température, leur viscosité et/ou leur comportement d'écoulement.

4. Procédé selon l'une quelconque des revendications 1 à 3, **caractérisé en ce que** le matériau synthétique de base (4) thermoplastique est contenu à raison de plus de 50% en masse, de préférence à raison de plus de 70% en masse, de manière particulièrement préférée à raison de plus de 85% en masse, dans la couche de glissement (3).

5. Procédé selon l'une quelconque des revendications 1 à 4, **caractérisé en ce que** le matériau synthétique de base (4) thermoplastique est une polyarylène-éthercétone (PEAC), telle qu'un polyphénylène, par exemple le poly[di-(oxy-1,4-phénylène)carbonyl-1,4-phénylènel (polyétheréthercétone, PEEC), le poly[oxy-1,4-phénylène-oxy-di-(1,4-phénylènecarbonyl-1,4-phénylène] (polyétheréthercétonecétone, PEECC) ou le poly[oxy-1,4-phénylènecarbonyl-1,4-phénylène-oxy-di-(1,4-phénylènecarbonyl)-1,4-phénylène] (polyéthercétonéthercétonecétone, PECECC).

6. Procédé selon la revendication 5, **caractérisé en ce que** le matériau synthétique de base (4) thermoplastique est une polyétheréthercétonecétone (PEEC), qui présente une viscosité en masse fondue, à une température de 400°C, dans la plage de 100 Pa.s à 5000 Pa.s selon la norme ISO 11443.

7. Procédé selon l'une quelconque des revendications 1 à 6, **caractérisé en ce que** le matériau synthétique de base (4) thermoplastique de la couche de glissement (3) est assemblé au support (2) métallique sous forme de bande par complémentarité de forme et/ou par liaison de matière.

8. Procédé selon l'une quelconque des revendications 1 à 7, **caractérisé en ce qu'**on introduit, dans la couche de glissement (2), outre le matériau synthétique de base (4) thermoplastique, un ou plusieurs autres matériaux synthétiques contenant du fluor, tels que le polytétrafluoroéthylène (PTFE), l'éthylènetétrafluoroéthylène (ETFE), le polytrifluoroéthylène (PCTFE) ou le perfluoroéthylènepropylène (FEP), ou un ou plusieurs matériaux synthétiques exempts de fluor, en particulier techniques, ou un ou plusieurs autres additifs améliorant le frottement et/ou diminuant l'usure, en particulier inorganiques, tels que le disulfure de molybdène, le graphite, le sulfate de baryum, le sulfure de zinc, le borosilicate de plomb, les fibres de carbone, de verre et/ou de céramique.

9. Procédé selon la revendication 8, **caractérisé en ce que** la grosseur de particule des additifs améliorant le frottement et diminuant l'usure est inférieure à 1000 nm et se situe en particulier dans la plage de 3 nm à 300 nm, de préférence dans la plage de 5 nm à 150 nm, de manière particulièrement préférée dans la plage de 15 nm à 80 nm.

10. Procédé selon l'une quelconque des revendications 1 à 9, **caractérisé en ce que** le matériau synthétique de base (4) thermoplastique, le cas échéant compoundé avec des additifs améliorant le frottement et/ou diminuant l'usure, présente, sous une charge de 5 kg et à une température de 380°C, un indice de fluidité à chaud en volume selon la norme ISO 1133 inférieur à 20 cm³/10 min, de préférence inférieur à 8 cm³/10 min, par exemple de 2,5 cm³/10 min.

11. Procédé selon l'une quelconque des revendications 1 à 10, **caractérisé en ce qu'**on utilise un support (2) métallique en feuillard laminé à froid ou à chaud, en particulier des qualités DC 01 à DC 04 selon la norme DIN EN 10 139, en tôle fine ou en tôle extrafine ou en ruban métallique en acier noble, en aluminium ou en métal non ferreux.

12. Procédé selon l'une quelconque des revendications 1 à 11, **caractérisé en ce qu'**on utilise, comme support (2) métallique, un support (2) profilé, une tôle perforée ou du métal déployé (SM).

13. Procédé selon l'une quelconque des revendications 1 à 12, **caractérisé en ce qu'**une couche (5) de promoteur d'adhérence est disposée entre le support (2) métallique en forme de bande et la couche de glissement (3), dont l'épaisseur se situe en particulier dans la plage de 4 µm à 28 µm, de préférence dans la plage de 8 µm à 15 µm.

14. Procédé selon la revendication 13, **caractérisé en ce qu'**on utilise, comme promoteur d'adhérence (5), un adhésif thermofusible, résistant à la température jusqu'à la température de fusion du matériau synthétique de base, en particulier sous forme d'une dispersion aqueuse d'un polyuréthane thermoplastique en combinaison avec une dispersion d'acrylate à plusieurs phases, autoréticulante ou à base d'une résine époxyde, pouvant être appliqué sur le support (2), dans un procédé de revêtement de bobines.

15. Procédé selon l'une quelconque des revendications 1 à 14, **caractérisé en ce que** lors de l'utilisation d'un support (2) métallique sous forme de bande, qui est constitué par du métal déployé (SM) dans lequel se trouvent des ouvertures de maille (6) séparées les unes des autres par des âmes (7), les ouvertures (6) présentent à chaque fois une longueur de maille (ML) et une largeur de maille (MB) dans la plage de 1,0 mm à 15,0 mm, une largeur d'âme (SB) des âmes (7) se situant à chaque fois de préférence dans la plage de 0,3 mm à 2,0 mm et une épaisseur d'âme (SD) se trouvant à chaque fois de préférence dans une plage de 0,05 mm à 0,8 mm.

16. Procédé selon l'une quelconque des revendications 1 à 15, **caractérisé en ce que** le support (2) sous forme de bande est préchauffé avant son revêtement par la couche de glissement (3) à une température supérieure au point de fusion du matériau synthétique de base (4) thermoplastique - le cas échéant compoundé.

17. Procédé selon l'une quelconque des revendications 1 à 16, **caractérisé en ce que** le support (2) sous forme de bande, revêtu, et la couche de glissement (3) sont refroidis pour la solidification de la couche de glissement (3) - partant de leur application par la filière (14) à fente large - au moyen d'un cylindre de laminage (18) sous pression à une température inférieure d'au moins 30 K au point de fusion du matériau synthétique de base (4) - le cas échéant compoundé.

18. Procédé selon la revendication 17, **caractérisé en ce que** le support (2) sous forme de bande, revêtu, et la couche de glissement (3) solidifiée sont ensuite de nouveau chauffés à une température dans la plage du point de fusion du matériau synthétique de base (4) - le cas échéant compoundé - et ensuite refroidis dans un bain d'eau à une température dans la plage de 25°C à 50°C.
